# EUROPÄISCHE PATENTSCHRIFT

(11) **EP 0 600 170 B1**
(45) Veröffentlichungstag und Bekanntmachung des Hinweises auf die Patenterteilung: **17.12.1997**
(21) Anmeldenummer: 93114997.5
(22) Anmeldetag: 17.09.1993
(51) Int. Cl.: G07F 7/02

(54) **Verfahren zur Abgeltung von Dienstleistungen und/oder Waren und Einrichtung zur Durchführung des Verfahrens**
Method for the payment of services and/or articles and device for implementing this method
Méthode pour le paiement de services et/ou marchandises et dispositif pour sa mise en oeuvre

(30) Priorität: 01.12.1992 CH 3678/92
(43) Veröffentlichungstag der Anmeldung: 08.06.1994
(73) Patentinhaber: Landis & Gyr Technology Innovation AG, 6301 Zug (CH)
(72) Erfinder: Raimann, Gerhard, A-2534 Alland (AT)
(74) Vertreter: Müller, Hans-Jürgen, Dipl.-Ing.

(56) Entgegenhaltungen:
- EP-A- 0 257 596
- EP-A- 0 363 122
- EP-A- 0 429 176
- EP-A- 0 479 290
- WO-A-91/16691
- CH-A- 467 492
- DE-A- 4 103 415
- FR-A- 2 339 215
- US-A- 3 653 480

## Beschreibung

Die Erfindung bezieht sich auf ein Verfahren zur Abgeltung von Dienstleistungen und/oder Waren sowie auf eine Einrichtung zur Durchführung des Verfahrens gemäss den Oberbegriffen der Ansprüche 1 und 6.

Solche Verfahren werden vorteilhaft zur bargeldlosen Abgeltung von derartigen Dienstleistungen und/oder Waren angewandt, deren Preis - wie beispielsweise beim Telephonieren oder beim Tanken von Treibstoff - im voraus noch nicht feststeht.

CH-467 492 beschreibt ein Verfahren, bei dem von einer Magnetkarte ein gespeicherter Betrag gelesen wird, anschließend die Magnetisierung der Karte gelöscht wird und der Betrag in einem Steuergerät durch den Bezug von Waren oder Dienstleistungen vermindert wird. Nach dem Bezug wird der Restbetrag wieder auf die Karte aufmagnetisiert.

Weiterhin ist aus US-3 653 480 bekannt, von einer Guthabenkarte einen bestimmten Betrag zu kopieren, diesen in einer Verarbeitungs- bzw. Abrechnungseinheit um den während des Bezugs der Waren oder Dienstleistungen anfallenden Betrag zu vermindern und den Restbetrag wieder auf die Guthabenkarte zu kopieren, wobei der ursprüngliche Betrag überschrieben wird.

Es ist ebenfalls ein Verfahren bekannt (EP 0 185 365 B1 oder EP 0 479 290 A2), bei dem ein Betrag von einer vorbezahlten Guthabenkarte in einen Speicher geschrieben und im Speicher während einer Serviceleistung vermindert wird. Beim Abschluss der Serviceleistung wird der verminderte Betrag in die Guthabenkarte zurückgeschrieben, wodurch die Serviceleistung abgegolten ist.

Ohne besondere Massnahmen ist nicht gewährleistet, dass eine bezogene Dienstleistung/Ware auch tatsächlich durch eine Verminderung des Guthabens auf der Guthabenkarte abgegolten wird und dass kein höheres, als das um den Wert der Dienstleistung/Ware verminderte Guthaben in den Speicher der Guthabenkarte zurückgeschrieben wird.

Der Erfindung liegt die Aufgabe zugrunde, ein Verfahren zur sicheren Abgeltung von Dienstleistungen und/oder Waren anzugeben und eine Einrichtung zu schaffen, mit der das Verfahren durchführbar ist. Die genannte Aufgabe wird erfindungsgemäss durch die Merkmale der Ansprüche 1 und 6 gelöst.

Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: ein Blockdiagramm einer Einrichtung zur Abgeltung von Dienstleistungen und/oder Waren,
- Fig. 2: mehrere Datenendgeräte, welche über ein Kommunikationsnetz mit einem Sicherheitsmodul verbunden sind und
- Fig. 3: ein Ablaufdiagramm einer Abgeltung.

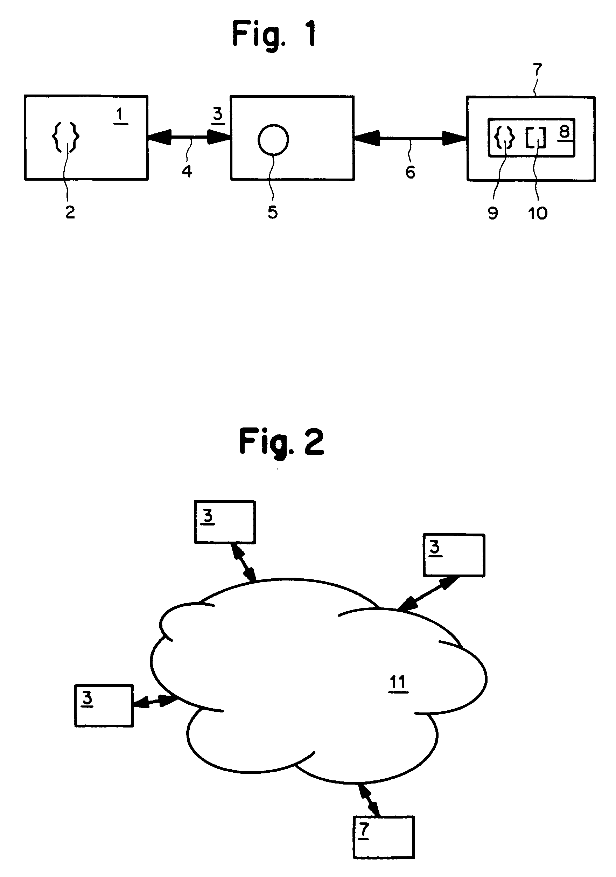

In der Fig. 1 bedeutet 1 ein einen Speicher 2 aufweisendes Guthabenmittel und 3 ein Datenendgerät (terminal), welches eine Kommunikationseinrichtung 4 aufweist, durch welche Daten des Guthabenmittels 1 vom Datenendgerät 3 aus lesbar und Daten des Guthabenmittels 1 veränderbar sind. Das Datenendgerät 3 weist im weiteren eine Aktivität 5 auf und ist über einen Kommuniktionskanal 6 mit einem Sicherheitsmodul 7 verbunden, welches ein Speichermittel 8 mit einem ersten Speicherbereich 9 und einem zweiten Speicherbereich 10 aufweist.

Das Datenendgerät 3 ist mindestens ein Teil einer oder verbunden mit einer Einrichtung zum Bezug einer Dienstleistung und/oder einer Ware; beispielsweise ist das Datenendgerät 3 ein Payphone, ein Fernkopierer oder eine Tanksäule.

Die Aktivität 5 ist eine elektronische Schaltung und/oder ein programmierter Prozessor. Bei Bedarf kann die Aktivität 5 durch mehrere programmierte Prozessoren verwirklicht sein.

Das Guthabenmittel 1 weist bei Bedarf Prozessoren und/oder weitere Funktionseinheiten auf und weist in seinem Speicher einen vorbezahlten, zur Abgeltung von Dienstleistungen und/oder Waren anstelle von Bargeld verfügbaren Betragswert auf.

Bei Bedarf entspricht der verfügbare Betragswert beispielsweise einer Anzahl Tax-Impulse oder einer Anzahl Liter Treibstoff.

Das Guthabenmittel 1 ist beispielsweise eine sogenannte Chip-Karte (integrated circuits card), wie sie etwa in ISO/IEC 7816 normiert ist.

Der Speicherbereich 9 ist mit Vorteil ein Schreib/Lese-Speicher, dessen Inhalt bei allfällig ausfallender Speisung nicht verloren geht.

Bei Bedarf weist das Sicherheitsmodul 7 Prozessoren und/oder weitere Funktionseinheiten auf. In einer Variante der Einrichtung ist das Sicherheitsmodul 7 eine Chip-Karte.

Im Bedarfsfall ist das Sicherheitsmodul 7 zusammen mit dem Kommunikationskanal 6 und dem Datenendgerät 3 in einer gemeinsamen Baugruppe verwirklicht.

Die Fig. 2 zeigt drei mittels eines Kommunikationsnetztes 11 mit einem Sicherheitsmodul 7 verbundene Datenendgeräte 3. Eine maximale Anzahl Datenendgeräte 3 im Kommunikationsnetz 11 ist grundsätzlich nicht begrenzt. Das Kommunikationsnetz 11 verwirklicht den Kommunikationskanal 6 (Fig. 1) zwischen jedem Datenendgerät 3 und dem Sicherheitsmodul 7.

Das Kommunikationsnetz 11 ist grundsätzlich ein beliebiges Datennetzwerk, in welchem der Kommunikationskanal 6 verfügbar ist.

In vorteilhafter Weise ist das Kommunikationsnetz 11 ein Telephonnetz oder ein Datennetz, in welchem ein Auf/Ab-Bau des Kommunikationskanals 6 vom Datenendgerät 3 aus in bekannter Art ausführbar ist.

Eine Einrichtung mit dem Datenendgerät 3 (Fig. 1), dem Guthabenmittel 1, dem Kommunikationskanal 6 und dem Sicherheitsmodul 7 ermöglicht eine sichere Abgeltung von Dienstleistungen und/oder Waren.

Die Einrichtung weist ein Blockierungs- beziehungsweise Freigabemittel auf, welches Transaktionen zum Guthabenmittel 1 nur aus dem ersten Speicherbereich 9 erlaubt und somit Transaktionen zum Guthabenmittel 1 aus dem zweiten Speicherbereich 10 nicht zulässt.

Im folgenden wird ein vorteilhaftes Verfahren zur sicheren Abgeltung von Dienstleistungen und/oder Waren prinzipiell beschrieben, wobei davon ausgegangen wird, dass der erste Speicherbereich 9 leer ist.

In einer ersten Transaktion vor einem Bezug einer Dienstleistung/Ware wird ein für die Dienstleistung/Ware verwendbarer Betrag M vom Guthabenmittel 1 (Fig. 1) in den ersten Speicherbereich 9 des Speichermittels 8 verschoben. Während des Bezugs der Dienstleistung wird in bekannter Weise ein laufender Kostenbetrag K der Dienstleistung/Ware ermittelt. In einer zweiten Transaktion wird ein unverbrauchter Betrag M_{U} vom ersten Speicherbereich 9 in das Guthabenmittel 1 verschoben, wobei der unverbrauchte Betrag M_{U} die Differenz zwischen dem verwendbaren Betrag M und dem Kostenbetrag K ist. Diese zweite Transaktion erfolgt beispielsweise nach dem Bezug der Dienstleistung/Ware oder wenn der Kostenbetrag K mit einer vorbestimmten Differenz den verwendbaren Betrag M erreicht. In einer dritten Transaktion wird die Differenz M-M_{U} zwischen dem verwendbaren Betrag M und dem unverbrauchten Betrag M_{U}, was dem Kostenbetrag K entspricht, vom ersten Speicherbereich 9 in den zweiten Speicherbereich 10 verschoben.

Durch die zweite und die dritte Transaktion wird also der verwendbare Betrag M aus dem ersten Speicherbereich 9 wieder entfernt. Der Inhalt des ersten Speicherbereichs 9 ist somit wieder leer; weitere Beträge könnten jetzt allenfalls nicht mehr aus dem ersten Speicherbereich 9 auf das Guthabenmittel 1 verschoben werden.

In einer ersten Variante des Verfahrens werden Teilbeträge des Betrags M - die beispielsweise je einem Taximpuls entsprechen - im Sicherheitsmodul 7 vom ersten Speicherbereich 9 in den zweiten Speicherbereich 10 verschoben, wobei die Teilbeträge über den Kommunikationskanal 6 und das Datenendgerät 3 oder in einer weiteren Variante des Verfahrens direkt im Sicherheitsmodul 7 verschoben werden.

Mit Vorteil werden bei den Transaktionen Kennungen (Signaturen) verwendet. Eine Kennung weist vorteilhaft mindestens einen Schlüssel auf. Bei Bedarf werden verschiedene Schlüssel eingesetzt. Verschiedene Transaktionen werden bei Bedarf nach verschiedenen Algorithmen durchgeführt.

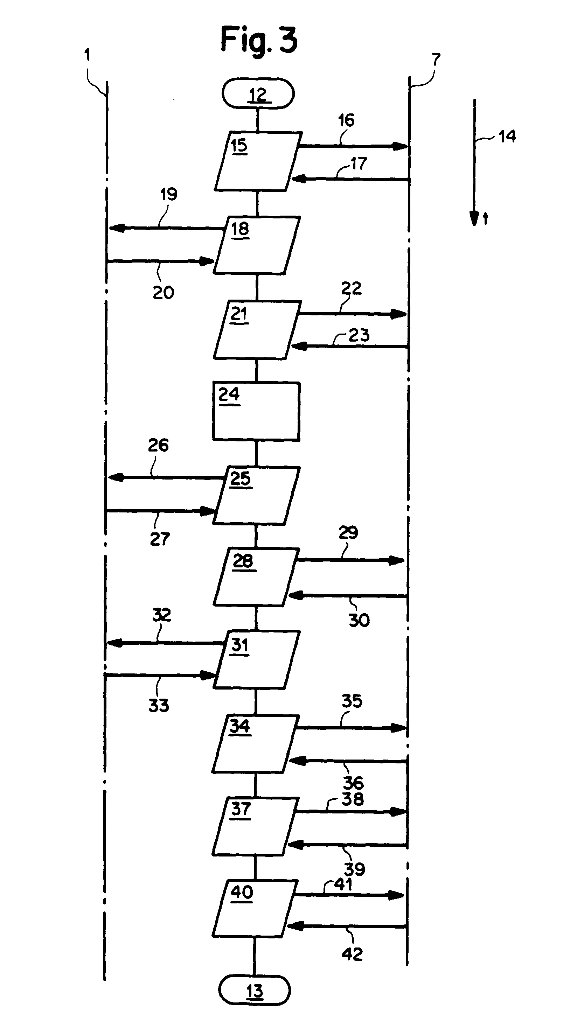

In der Fig. 3 sind auszuführende Aktionen, mit welchen eine sichere Abgeltung mit Vorteil durchführbar ist, sequentiell zwischen einem Anfang 12 und einem Ende 13 dargestellt. Wesentliche, auf eine Aktion bezogene Informationsflüsse über den Kommunikationskanal 6 (Fig. 1) zum oder vom Sicherheitsmodul 7, beziehungsweise über die Kommunikationseinrichtung 4 (Fig. 1) zum oder vom Guthabenmittel 1, sind mittels eines Pfeiles zwischen der Aktion und dem je als Strichpunktlinie dargestellten Sicherheitsmodul 7 bezeihungsweise Guthabenmittel 1 eingezeichnet. Mit Vorteil werden die Aktionen von der Aktivität 5 (Fig. 1) ausgelöst.

Informationsflüsse können dem Wesen nach eigentliche Datenflüsse (data flow) oder Ereignisflüsse (event flow) sein und sie sind in bekannter Art beispielsweise durch Aufruf eines Unterprogramms oder als Parameter eines Unterprogramms, durch Senden eines Datentelegramms oder eines Signals oder auch durch Starten eines Prozesses verwirklicht.

Der zeitliche Ablauf der Aktionen verläuft in der Richtung einer Zeitachse 14.

In einer ersten Aktion 15 wird eine erste einzigartige Zahl n₁ erzeugt und im Sicherheitsmodul 7 sowie im Datenendgerät 3 (Fig. 1) bekanntgemacht, wobei die einzigartige Zahl n₁ vorteilhaft vom Sicherheitsmodul 7 selbst erzeugt wird. Bei Bedarf wird die einzigartige Zahl n₁ jedoch im Datenendgerät 3 erzeugt. Mit Vorteil ist ein erster Informationsfluss 16 eine Anfrage zur Generierung der einzigartigen Zahl n₁ und ein zweiter Informationsfluss 17 weist die einzigartige Zahl n₁ auf.

Mit der einzigartigen Zahl n₁, welche vorteilhaft eine Zufallszahl oder eine Pseudozufallszahl ist, wird verhindert, dass allfällig in der Kommunikationseinrichtung 4 oder im Kommunikationskanal 6 abgehörte Datenströme in betrügerischer Absicht duplizierbar sind.

In einer zweiten Aktion 18 veranlasst ein dritter Informationsfluss 19 eine erste Verminderungsoperation D_{G}, durch welche der Betragswert des Guthabenmittels 1 um den für die Dienstleistung/Ware verwendbaren Betrag M verkleinert wird. Der dritte Informationsfluss 19 weist mit Vorteil die einzigartige Zahl n₁ und ferner bei Bedarf auch einen minimalen Wert auf, den der Betrag M zur Anforderung der Dienstleistung/Ware aufweisen muss. In der Aktion 18 wird nach Ablauf der Verminderungsoperation D_{G} ein vierter Informationsfluss 20 durch das Datenendgerät 3 (Fig. 1) entgegengenommen. Im vierten Informationsfluss 20 sind mit Vorteil der Betrag M und eine erste Kennung S₁ enthalten. Im weiteren weist der vierte Infomationsfluss 20 bei Bedarf zusätzliche Daten wie beispielsweise den verfügbaren Betragswert des Guthabenmittels 1 auf. Die Kennung S₁ wird vorteilhaft durch eine Transformation aus dem Betrag M, der einzigartigen Zahl n₁ und einem ersten Schlüssel K₁ gebildet.

In einer dritten Aktion 21 veranlasst ein fünfter Informationsfluss 22 eine erste Erhöhungsoperation I_{S}, durch welche der verwendbare Betrag M im ersten Speicherbereich 9 gespeichert wird. Der fünfte Informationsfluss 22 weist den verwendbaren Betrag M und mit Vorteil die erste Kennung S₁ auf. In der ersten Erhöhungsoperation I_{S} wird der verwendbare Betrag M vorteilhaft nur nach einer erfolgreichen Überprüfung der ersten Kennung S₁ abgespeichert. Der Abschluss der Erhöhungsoperation I_{S} wird vom Sicherheitsmodul 7 aus während der dritten Aktion 21 durch einen sechsten Informationsfluss 23 dem Datenendgerät 3 (Fig. 1) bestätigt.

In einer vierten Aktion 24, welche während des Bezugs der Dienstleistung/Ware ausgeführt wird, wird ein laufender Kostenbetrag K der Dienstleistung/Ware ermittelt. Im weiteren wird in der vierten Aktion 24 sichergestellt, dass der Kostenbetrag K den verwendbaren Betrag M nicht überschreitet.

Ist die bezogene Dienstleistung beispielsweise ein Telephonservice, ist die Ermittlung des laufenden Kostenbetrags K mit Hilfe aufaddierter Taximpulse in bekannter Art im Datenendgerät 3 fortlaufend durchführbar.

Bei Bedarf werden in der vierten Aktion 24 über Dialogmittel des Datenendgerätes 3 Benutzeranweisungen weitergegeben.

Zudem ermöglicht die vierte Aktion 24 einen Abbruch des Bezugs der Dienstleistung/Ware, wenn der Kostenbetrag K bis zu einer vorbestimmten Differenz - welche auch null sein kann - den verwendbaren Betrag M erreicht.

In einer fünften Aktion 25 wird eine zweite einzigartige Zahl n₂ erzeugt und im Guthabenmittel 1 und im Datenendgerät 3 (Fig. 1) bekanntgemacht, wobei die zweite einzigartige Zahl n₂ vorteilhaft vom Guthabenmittel 1 selbst erzeugt wird. Bei Bedarf wird die zweite einzigartige Zahl n₂ jedoch im Datenendgerät 3 erzeugt. Mit Vorteil ist ein siebter Informationsfluss 26 eine Anfrage zur Generierung der einzigartigen Zahl n₂ und ein achter Informationsfluss 27 weist die einzigartige Zahl n₂ auf.

Mit der einzigartigen Zahl n₂, welche vorteilhaft eine Zufallszahl oder eine Pseudozufallszahl ist, wird verhindert, dass allfällig in der Kommunikationseinrichtung 4 oder im Kommunikationskanal 6 abgehörte Datenströme in betrügerischer Absicht duplizierbar sind.

In einer sechsten Aktion 28 veranlasst ein neunter Informationsfluss 29 eine zweite Verminderungsoperation D_{S1}, durch welche der im ersten Speicherbereich 9 abgespeicherte Betrag M um den unverbrauchten Betrag M_{U} verkleinert wird. Der neunte Informationsfluss 29 weist mit Vorteil die zweite einzigartige Zahl n₂ und den unverbrauchten Betrag M_{U} auf. In der sechten Aktion 28 wird nach Ablauf der zweiten Verminderungsoperation D_{S1} ein zehnter Informationsfluss 30 durch das Datenendgerät 3 (Fig. 1) entgegengenommen. Im zehnten Informationsfluss 30 sind mit Vorteil der Betrag M_{U} und eine zweite Kennung S₂ enthalten. Die zweite Kennung S₂ wird vorteilhaft durch eine Transformation aus dem Betrag M_{U}, der zweiten einzigartige Zahl n₂ und einem zweiten Schlüssel K₂ gebildet.

In einer siebten Aktion 31 veranlasst ein elfter Informationsfluss 32 eine zweite Erhöhungsoperation I_{G}, durch welche der unverbrauchte Betrag M_{U} auf das Guthabenmittel 1 zurückgespeichert wird. Der elfte Informationsfluss 32 weist mit Vorteil den unverbrauchten Betrag M_{U} und die zweite Kennung S₂ auf. In der zweiten Erhöhungsoperation I_{G} wird der unverbrauchte Betrag M_{U} vorteilhaft nur nach einer erfolgreichen Überprüfung der zweiten Kennung S₂ abgespeichert. Der Abschluss der Erhöhungsoperation I_{G} wird vom Guthabenmittel 1 aus während der siebten Aktion 31 durch einen zwölften Informationsfluss 33 dem Datenendgerät 3 (Fig. 1) bestätigt.

Nach der siebten Aktion 31 kann das Guthabenmittel 1 bei Bedarf dem Datenendgerät 3 entzogen werden.

In einer achten Aktion 34 wird eine dritte einzigartige Zahl n₃ erzeugt, und im Sicherheitsmodul 7 und im Datenendgerät 3 (Fig. 1) bekannt gemacht. Mit Vorteil ist ein dreizehnter Informationsfluss 35 eine Anfrage zur Generierung der dritten einzigartigen Zahl n₃ und ein vierzehnter Informationsfluss 36 weist die dritte einzigartige Zahl n₃ auf.

Mit der dritten einzigartigen Zahl n₃, welche vorteilhaft eine Zufallszahl oder eine Pseudozufallszahl ist, wird verhindert, dass allfällig im Kommunikationskanal 6 abgehörte Datenströme in betrügerischer Absicht duplizierbar sind.

In einer neunten Aktion 37 veranlasst ein fünfzehnter Informationsfluss 38 eine dritte Verminderungsoperation D_{S2}, durch welche der Inhalt des ersten Speicherbereiches 9 um die Differenz M-M_{U} zwischen dem verwendbaren Betrag M und dem unverbrauchten Betrag M_{U} verkleinert wird. Die Differenz M-M_{U} entspricht dem Kostenbetrag K der bezogenen Dienstleistung/Ware. Der fünfzehnte Informationsfluss 38 weist mit Vorteil die dritte einzigartige Zahl n₃ und die Differenz M-M_{U} auf. In der neunten Aktion 37 wird nach Ablauf der dritten Verminderungsoperation D_{S2} ein sechzehnter Informationsfluss 39 vom Datenendgerät 3 (Fig. 1) entgegengenommen. Im sechzehnten Informationsfluss 39 sind mit Vorteil die Differenz M-M_{U} und eine dritte Kennung S₃ enthalten. Die dritte Kennung S₃ wird vorteilhaft durch eine Transformation aus der Differenz M-M_{U}, der dritten einzigartigen Zahl n₃ und dem ersten Schlüssel K₁ gebildet.

In einer zehnten Aktion 40 veranlasst ein siebzehnter Informationsfluss 41 eine dritte Erhöhungsoperation I_{S2}, durch welche die Differenz M-M_{U} im zweiten Speicherbereich 10 gespeichert wird. Der siebzehnte Informationsfluss 41 weist die Differenz M-M_{U}, die dritte einzigartige Zahl n₃ und mit Vorteil die dritte Kennung S₃ auf. In der dritten Erhöhungsoperation I_{S2} wird die Differenz M-M_{U} vorteilhaft nur nach einer erfolgreichen Überprüfung der dritten Kennung S₃ abgespeichert. Je nach Bedarf wird in der dritten Erhöhungsoperation I_{S2} die Differenz M-M_{U} einem bereits im zweiten Speicherbereich 10 abgelegten Wert hinzusummiert und abgespeichert oder als ein weiteres Datum getrennt abgespeichert. Der Abschluss der dritten Erhöhungsoperation I_{S2} wird vom Sicherheitsmodul 7 aus während der zehnten Aktion 40 durch einen achtzehnten Informationsfluss 42 dem Datenendgerät 3 (Fig. 1) bestätigt.

In den beiden Varianten des Verfahrens werden die Teilbeträge vorteilhaft in der vierten Aktion 24 vom ersten Speicherbereich 9 in den zweiten Speicherbereich 10 verschoben, wobei in der ersten Variante mit Vorteil jeweils die achte Aktion 34, die neunte Aktion 37 und die zehnte Aktion 40 ausgeführt werden.

Wird der Kommunikationskanal 6 nach der dritten Aktion 21 bis zum Beginn der sechsten Aktion 28 nicht benutzt und ist der Kommunikationskanal 6 beispielsweise ein Telephonkanal, ist die logische Verbindung zwischen dem Datenendgerät 3 und dem Sicherheitsmodul 7 in dieser Zeit mit Vorteil auflösbar.

Die drei Kennungen S₁, S₂ und S₃ sind mit Vorteil kryptographische Kennungen (Signaturen).

Durch Aufbau der drei Kennungen S₁, S₂ und S₃ und weiter auch durch die Art der beiden Schlüssel K₁ und K₂ kann die erreichbare Sicherheit den gewünschten Anforderungen angepasst werden.

Durch das gezeigte Verfahren, in welchem im wesentlichen drei Transformationen ausgeführt werden, kann der Kostenbetrag K einer Dienstleistung/Ware sicher im Guthabenmittel 1 abgebucht und auch im Sicherheitsmodul 7 abgelegt werden.

Nur Beträge, die vorher im gültigen Guthabenmittel 1 abgebucht wurden, können im Sicherheitsmodul abgelegt werden.

Der Kostenbetrag K der Dienstleistung/Ware muss zum Voraus nicht bekannt sein; das Verfahren erlaubt eine Abbuchung von schnell aufeinanderfolgenden Beträgen, wie sie beispielsweise bei Taximpulsen in Payphones oder in Fernkopiergeräten oder auch bei einem Taxmeter in einem Mietauto oder beim Tanken auftreten.

Das Verfahren ermöglicht auch in einem offenen System eine sichere Verschiebung des Kostenbetrags K von einem Guthabenmittel 1 auf ein Sicherheitsmodul 7.

Im Verfahren wird keine dauernde logische Verbindung zwischen dem Guthabenmittel 1 und dem Sicherheitsmodul 7 benötigt. Durch das Sicherheitsmodul 7 sind mehrere Guthabenmittel 1 beispielsweise im Time Sharing Betrieb bedienbar.

Das Verfahren ist mit wenig Aufwand ausbaubar. Wird der Kostenbetrag K als Dateneinheit mindestens zusammen mit einer Kennung des Eigentümers des Datenendgerätes 3 und/oder einer Kennung des Lieferanten der Dienstleistung/Ware und/oder einer Kennung der Verkaufsstelle bzw. des Herausgebers (Issuer) des Guthabenmittels 1 abgelegt, sind je nach Bedarf beispielsweise die Dienstleistungen und/oder Waren verschiedener Institutionen und/oder verschiedene Dienstleistungen und/oder Waren einer Institution verrechenbar und/oder statistisch erfassbar.

Durch die Möglichkeit der Verrechnung ist im weiteren ein einziges Guthabenmittel 1 für verschiedene Dienstleistungen und/oder Waren verwendbar, auch wenn diese von verschiedenen Institutionen angeboten werden.

## Patentansprüche

1. Verfahren zur Abgeltung von Dienstleistungen und/oder Waren, bei dem vor einem Bezug einer Dienstleistung und/oder einer Ware ein verwendbarer Betrag (M) von einem Guthabenmittel (1) gelesen und in einen Speicher (8) geschrieben wird, ein laufender Kostenbetrag (K) der Dienstleistung und/oder der Ware während des Bezugs ermittelt wird und
ein unverbrauchter Betrag (Mᵤ) in das Guthabenmittel (1) zurückgespeichert wird, wobei der unverbrauchte Betrag (Mᵤ) die Differenz zwischen dem verwendbaren Betrag (M) und dem Kostenbetrag (K) ist,
**dadurch gekennzeichnet,**
daß ein Sicherheitsmodul (7) verwendet wird, das den Speicher (8) mit einem ersten Speicherbereich (9) und einem zweiten Speicherbereich (10) aufweist,
daß in einer ersten Transaktion, vor dem besagten Bezug, der verwendbare Betrag (M) vom Guthabenmittel (1) in den ersten Speicherbereich (9) verschoben wird, wobei der Betragswert des Guthabenmittels (1) um den verwendbaren Betrag (M) vermindert wird,
daß in einer zweiten Transaktion der unverbrauchte Betrag (Mᵤ) vom ersten Speicherbereich (9) in das Guthabenmittel (1) verschoben wird, wobei der im ersten Speicherbereich (9) abgespeicherte Betrag um den unverbrauchten Betrag (Mᵤ) verkleinert wird und
daß in einer dritten Transaktion der Kostenbetrag (K) vom ersten Speicherbereich (9) in den zweiten Speicherbereich (10) verschoben wird, wobei der Inhalt des ersten Speicherbereichs (9) um den Kostenbetrag (K) verkleinert wird.

2. Verfahren nach Anspruch 1,
**dadurch gekennzeichnet,**
daß Blockier- und/oder Freigabemittel verwendet werden, welche Transaktionen zum Guthabenmittel (1) nur aus dem ersten Speicherbereich (9) erlauben, Transaktionen zum Guthabenmittel (1) aus dem zweiten Speicherbereich (10) aber nicht zulassen.

3. Verfahren nach Anspruch 1 oder 2,
**dadurch gekennzeichnet,**
daß bei den Transaktionen Kennungen (Signaturen) verwendet werden.

4. Verfahren nach einem der Ansprüche 1-3,
**dadurch gekennzeichnet,**
daß die dritte Transaktion auf mindestens zwei Teiltransaktionen aufgeteilt wird, von denen in einer Teiltransaktion ein Teilbetrag des Kostenbetrags (K) vom ersten Speicherbereich (9) in das zweite Speicherbereich (10) verschoben wird.

5. Verfahren nach einem der Ansprüche 1-4,
**dadurch gekennzeichnet,**
daß ein Datenendgerät (3) die Daten des Guthabenmittels (1) liest und verändert und daß das Datenendgerät (3) über einen Kommunikationskanal (6) mit dem Sicherheitsmodul (7) verbunden wird.

6. Einrichtung zur Abgeltung von Dienstleistungen und/oder Waren, mit einem einen Quellspeicher (2) aufweisenden Guthabenmittel (1), mit einer Kommunikationseinrichtung (4, 6, 11) zum Übertragen eines verwendbaren Betrags (M) aus dem Quellspeicher (2) des Guthabenmittels (1) in einen Speicher (8), mit einer Bezugseinrichtung zum Bezug einer Ware und/oder Dienstleistung und zum Ermitteln eines Kostenbetrags (K) für den Bezug, und
mit einer Übertragungseinrichtung zum Übertragen des um den Kostenbetrag (K) verminderten Guthabenbetrags (M) in den Quellspeicher (2) des Guthabenmittels (1),
**dadurch gekennzeichnet,**
daß ein Sicherheitsmodul (7) den Speicher (8) aufweist, daß der Speicher (8) einen ersten Speicherbereich (9) und einen zweiten Speicherbereich (10) aufweist,
daß vor dem Bezug mindestens ein Teil des verwendbaren Betrags (M) in einer ersten Transaktion im Quellspeicher (2) löschbar und in den ersten Speicherbereich (9) verschiebbar ist, daß nach dem Bezug in einer zweiten Transaktion der um den Kostenbetrag (K) verminderte Betrag (M) als unverbrauchter Betrag (Mᵤ) vom ersten Speicherbereich (9) in den Quellspeicher (2) des Guthabenmittels (1) verschiebbar ist, unter Verminderung des im ersten Speicherbereich (9) abgespeicherten Betrags (M) um den unverbrauchten Betrag (Mᵤ), und in einer dritten Transaktion der Kostenbetrag (K) unter Verminderung des Inhalts des ersten Speicherbereichs (9) aus diesem in den zweiten Speicherbereich (10) verschiebbar ist.

7. Einrichtung nach Anspruch 6,
**dadurch gekennzeichnet,**
daß ein Datenendgerät (3), mit dem Guthabenmitteldaten lesbar und veränderbar sind, über einen Kommunikationskanal (6) mit dem Sicherheitsmodul (7) verbindbar ist, welches die beiden Speicherbereiche (9, 10) enthält.

8. Einrichtung nach einem der Ansprüche 6 oder 7,
**dadurch gekennzeichnet,**
daß eine Chip-Karte das Sicherheitsmodul (7) bildet.

9. Einrichtung nach einem der Ansprüche 6-8,
**dadurch gekennzeichnet,**
daß der Kommunikationskanal (6) zwischen dem Datenendgerät (3) und dem Sicherheitsmodul (7) in einem Kommunikationsnetz (11) aufbaubar ist.

10. Einrichtung nach einem der Ansprüche 6-9,
**dadurch gekennzeichnet,**
daß mehrere Datenendgeräte (3) über das Kommunikationsnetz (11) mit dem Sicherheitsmodul (7) verbunden sind.

## Claims

1. Method for payment for services and/or goods, wherein prior to purchase of a service and/or goods, a useable amount (M) is read from a credit balance means (1) and written into a memory (8), a running cost amount (K) for the service and/or the goods is determined during the purchase, and an unused amount (Mᵤ) is stored back into the credit balance means (1), whereby the unused amount (Mᵤ) is the difference between the useable amount (M) and the cost amount (K), characterised in that a security module (7) is used which is provided with the memory (8) with a first memory area (9) and a second memory area (10),
that in a first transaction prior to the purchase described, the useable amount (M) is moved from the credit balance means (1) to the first memory area (9), wherein the value of the credit balance means (1) is reduced by the useable amount (M),
that in a second transaction the unused amount (Mᵤ) is moved from the first memory area (9) to the credit balance means (1), wherein the amount stored in the first memory area (9) is reduced by the unused amount (Mᵤ), and
that in a third transaction the cost amount (K) is moved from the first memory area (9) into the second memory area (10), wherein the contents of the first memory area (9) are reduced by the cost amount (K).

2. Method according to claim 1, characterised in that inhibiting and/or enabling means are used which permit transactions to the credit balance means (1) only from the first memory area (9), and do not permit transactions to the credit balance means (1) from the second memory area (10).

3. Method according to claim 1 or 2, characterised in that during transactions identifiers (signatures) are used.

4. Method according to one of claims 1 - 3, characterised in that the third transaction is divided into at least two partial transactions, in one of which a partial amount of the cost amount (K) is moved from the first memory area (9) to the second memory area (10).

5. Method according to one of claims 1 - 4, characterised in that a data terminal device (3) reads and alters the data from the credit balance means (1) and that the data terminal device (3) is connected to the security module (7) via a communications channel (6).

6. Apparatus for payment for services and/or goods, with a credit balance means (1) provided with a source memory (2), with a communications device (4, 6, 11) for transferring a useable amount (M) from the source memory (2) of the credit balance means (1) to a memory (8), with a purchase apparatus for purchasing goods and/or services and for determining a cost amount (K) for the purchase, and
with a transfer apparatus for transferring the credit amount (M) less the cost amount (K) to the source memory (2) of the credit balance means, characterised in that a security module (7) is provided with the memory (8),
that the memory (8) is provided with a first memory area (9) and a second memory area (10),
that prior to purchase, a part of the usable amount (M) is erasable in the source memory (2) and moveable into the first memory area (9),
that after the purchase, in a second transaction the amount (M), reduced by the cost amount (K) can be moved as the unused amount (Mᵤ) from the first memory area (9) to the source memory (2) of the credit balance means (1), reducing the amount (M) stored in the first memory area (9) by the unused amount (Mᵤ),
and in a third transaction the cost amount (K) can be moved from the first memory area, reducing the content thereof, to the second memory area (10).

7. Apparatus according to claim 6, characterised in that a data terminal device (3) with which credit balance means data can be read and altered, can be connected to the security module (7) which contains both memory area (9, 10), via a communications channel (6).

8. Apparatus according to one of claims 6 or 7, characterised in that a chip card forms the security module (7).

9. Apparatus according to one of claims 6 - 8, characterised in that the communications channel (6) can be built in between the data terminal device (3) and the security module (7) in a communications network (11).

10. Apparatus according to one of claims 6 - 9, characterised in that several data terminal devices (3) are connected to the security module (7) via the communications network (11).

## Revendications

1. Procédé de paiement de prestations de service et/ou de marchandises,
dans lequel, avant l'achat d'une prestation de service et/ou d'une marchandise, un montant utilisable (M) est lu par un moyen (1) de crédit et écrit dans une mémoire (8),
dans lequel un montant courant (K) du coût de la prestation de service et/ou de la marchandise est calculé pendant l'achat, et
dans lequel un montant inutilisé (Mᵤ) est replacé en mémoire dans le moyen (1) de crédit, où le montant inutilisé (Mᵤ) est la différence entre le montant utilisable (M) et le montant (K) du coût,
caractérisé
en ce qu'un module (7) de sécurité est utilisé qui comprend la mémoire (8) dotée d'une première zone (9) de mémoire et d'une seconde zone (10) de mémoire, en ce que, au cours d'une première transaction, avant ledit achat, le montant utilisable (M) est déplacé, du moyen (1) de crédit jusqu'à la première zone (9) de mémoire, où la valeur du montant du moyen (1) de crédit est minorée du montant utilisable (M),
en ce que, au cours d'une deuxième transaction, le montant inutilisé (Mᵤ) est déplacé, de la première zone (9) de mémoire jusqu'au moyen (1) de crédit, où le montant stocké dans la première zone (9) de mémoire est diminué du montant inutilisé (Mᵤ), et en ce que, au cours d'une troisième transaction, le montant (K) du coût est déplacé, de la première zone (9) de mémoire jusqu'à la seconde zone (10) de mémoire, où, ce faisant le contenu de la première zone (9) de mémoire est diminué du montant (K) du coût.

2. Procédé selon la revendication 1, caractérisé en ce que des moyens de blocage et/ou de libération sont utilisés, lesquels permettent des transactions vers le moyen (1) de crédit seulement à partir de la première zone (9) de crédit, mais qui n'autorisent pas de transactions vers le moyen (1) de crédit à partir de la seconde zone (10) de mémoire.

3. Procédé selon la revendication 1 ou 2, caractérisé en ce que, lors des transactions, des identifications (signatures) sont utilisées.

4. Procédé selon l'une quelconque des revendications 1 à 3, caractérisé en ce que la troisième transaction est partagée au moins-en deux transactions partielles où, au cours d'une transaction partielle, un montant partiel du montant (K) du coût est déplacé, de la première zone (9) de mémoire jusqu'à la seconde zone (10) de mémoire.

5. Procédé selon l'une quelconque des revendications 1 à 4, caractérisé en ce qu'un terminal (3) de données lit et modifie les données du moyen (1) de crédit, et en ce que le terminal (3) de données est connecté, via une voie (6) de communication, au module (7) de sécurité.

6. Dispositif de paiement de prestations de service et/ou de marchandises, comprenant
- un moyen (1) de crédit doté d'une mémoire source (2),
- un dispositif de communication (4, 6, 11) pour la transmission d'un montant utilisable (M), depuis la mémoire source (2) du moyen (1) de crédit jusqu'à une mémoire (8),
- un dispositif d'achat pour l'achat d'une marchandise et/ou d'une prestation de service et pour le calcul d'un montant (K) du coût pour l'achat, et
- un dispositif de transmission pour transmettre le montant (M) du crédit minoré du montant (K) du coût, dans la mémoire source (2) du moyen (1) de crédit,
caractérisé
en ce qu'un module (7) de sécurité comprend la mémoire (8),
en ce que la mémoire (8) comprend une première zone (9) de mémoire et une seconde zone (10) de mémoire, en ce que, avant l'achat, au moins une partie du montant utilisable (M) est effaçable dans la mémoire source (2) au cours d'une première transaction, et en ce que cette partie dudit montant est déplaçable dans la première zone (9) de mémoire,
en ce que, après l'achat, au cours d'une deuxième transaction, le montant (M) minoré du montant (K) du coût est déplaçable en tant que montant inutilisé (Mᵤ), de la première zone (9) de mémoire jusqu'à la mémoire source (2) du moyen (1) de crédit, le montant (M) stocké dans la première zone (9) de mémoire étant minoré du montant inutilisé (Mᵤ) et, au cours d'une troisième transaction, le montant (K) du coût, en étant minoré du contenu de la première zone (9) de mémoire, est déplaçable, de cette première zone de mémoire jusqu'à la seconde zone (10) de mémoire.

7. Dispositif selon la revendication 6, caractérisé en ce qu'un terminal (3) de données, avec lequel des données du moyen de crédit peuvent être lues et modifiées, peut être connecté, via une voie (6) de communication, au module (7) de sécurité qui contient les deux zones de mémoire (9, 10).

8. Dispositif selon la revendication 6 ou 7, caractérisé en ce qu'une carte à puce constitue le module (7) de sécurité.

9. Dispositif selon l'une quelconque des revendications 6 à 8, caractérisé en ce que la voie (6) de communication peut, dans un réseau (11) de communication, être placée entre le terminal (3) de données et le module (7) de sécurité.

10. Dispositif selon l'une quelconque des revendications 6 à 9, caractérisé en ce que plusieurs terminaux (3) de données sont connectés, via le réseau (11) de communication, au module (7) de sécurité.
